# EUROPÄISCHE PATENTSCHRIFT

(11) **EP 0 607 493 B1**
(45) Veröffentlichungstag und Bekanntmachung des Hinweises auf die Patenterteilung: **24.02.1999**
(21) Anmeldenummer: 93112277.4
(22) Anmeldetag: 30.07.1993
(51) Int. Cl.: G05B 19/042, G05B 19/418

(54) **Realzeit-Steuerungssystem**
Real-time control system
Système de commande en temps réel

(30) Priorität: 18.01.1993 DE 9300562 U
(43) Veröffentlichungstag der Anmeldung: 27.07.1994
(73) Patentinhaber: SIEMENS AKTIENGESELLSCHAFT, 80333 München (DE)
(72) Erfinder: Scholz, Stephan, Dr. rer. nat., D-81677 München (DE); Becker, Wolfgang, Dipl.-Ing., D-81369 München (DE)

(56) Entgegenhaltungen:
- EP-A- 0 498 130
- US-A- 4 954 941
- US-A- 5 008 814
- IBM TECHNICAL DISCLOSURE BULLETIN, Bd. 31, Nr. 8, 1.Januar 1989, Seiten 317-320, XP000066539 "MANAGEMENT OF PROGRAMMING COMPATIBILITY WITHIN A SYSTEM OF SEPARATE DEPENDENT ELEMENTS"

## Beschreibung

Das Umrüsten (Up Grade) bzw. Nachrüsten (Growth) des Steuerungssystems von Vermittlungsstellen durch Wechseln von Software während des Betriebs ist ein Mittel, Entwicklungskosten zu vermindern und dadurch Wettbewerbsvorteile zu erhalten. Auf diese Weise kann der Netzbetreiber neue Leistungsmerkmale mit verringerter Logistik schnell und ohne Betriebsunterbrechung in das Netz einbringen.

Aus dem Dokument EP-A-0 498 130 ist es bekannt, daß Software-Module vor der Aufnahme ihrer bestimmungsgemäßen Zusammenarbeit durch eine entsprechende gegenseitige Abfrage der Versionsidentifizierer prüfen, ob sie zueinander kompatibel sind. Vor der eigentlichen Betriebs-Aufnahme des Systems wird also geprüft, ob die Zusammenarbeit der Systemkomponenten überhaupt funktionieren kann.

Das Dokument US-A-4 954 941 zeigt, wie man einen Prozess replizieren und anstelle des bisherigen Prozesses (Originaler Prozess) aktivieren kann, ohne dadurch den Betrieb des Systems wesentlich zu stören. Der Originale Prozess kann dann zu Wartungszwecken außer Betrieb genommen werden. Das Dokument zeigt jedoch nicht, wie der Originale Prozess nach Durchführung der Wartung wieder in das System eingebracht und aktiviert werden kann, ohne den Betrieb des Systems zu unterbrechen.

Aus dem Dokument US-A-5 008 814 ist ein Software-Ladeprozess (Soft-Load-Process) bekannt, um Systemsoftware zwischen einer Vielzahl von Prozessor-Einheiten in einem Kommunikationsnetz aufzudatieren (Updating). Dabei wird die neue System-Software zunächst auf einer ersten Proezssor-Einheit (Quellen-Prozessor-Einheit) installiert. Nach dieser Installierung der neuen Version der System-Software in der Quellen-Prozessor-Einheit wird die Verteilung der neuen System-Software auf die anderen Prozessor-Einheiten initialisiert. Während der Durchführung des Verteilungsprozesses ist der Nutzbetrieb einer Prozessor-Einheit blockiert, d.h. der Verteilungsprozess einer neuen System-Software auf eine Prozessor-Einheit muß also als ganzes durchgeführt werden, ohne daß das System dabei im Nutzbetrieb weiterlaufen kann.

Der Erfindung liegt die Aufgabe zugrunde, ein bezüglich des Auswechselns von Software flexibles Steuerungssystem sowie ein Verfahren zum Auswechseln von Software in einem Steuerungssystem während des Betriebs, d.h. ohne Betriebsunterbrechung anzugeben.

Diese Aufgabe wird durch die Merkmale des Anspruchs 1 und des Anspruchs 2 gelöst.

Eine weitere Ausgestaltung der Erfindung ist durch Anspruch 3 gegeben. Durch diese Ausgestaltung ist der Kommunikationsaufwand in der Umschaltephase des Kommunikationsverkehrs auf die neue geladene Software-Einheit stark verringert, da die Mitteilung des neuen Versionskennzeichens nur auf die Ereignisquellen beschränkt ist.

Eine weitere Ausgestaltung der Erfindung ist durch Anpsruch 5 angegeben. Aufgrund dieser Ausgstaltung braucht sich das Betriebssytem das für eine jeweilige Ereignisquelle relevante Versionskennzeichen nur während der Umschaltephase zu merken.

Eine weitere Ausgestaltung der Erfindung ist durch Anspruch 6 gegeben. Durch diese Ausgestaltung kann verhindert werden, daß eine Meldungs-Kette ausgelöst wird, obwohl noch nicht alle für die genannte Meldungs-Kette zum Austausch vorgesehenen Software-Einheiten tatsächlich ausgewechselt, d. h. geladen und aktiviert worden sind.

Eine weitere Ausgestaltung der Erfindung ist durch Anspruch 7 angegeben. Durch diese Ausgestaltung kann ein Anwender Gruppen von Ereignissen, sog. Meldungsklassen, zusammenfassen und nur diese gemeinsam umschalten.

Im folgenden wird ein Ausführungsbeispiel der Erfindung anhand der Zeichnung näher beschrieben.
Figur 1 zeigt ein Schalenmodell für Verarbeitungsplattformen des erfindungsgemäßen Realzeitsteuerungssystems,
Figur 2 zeigt den Nachrichtenaustausch zwischen zwei Dienstleistungsmoduln über verschiedene Plattformen,
Figur 3 veranschaulicht die Kombination des Konzepts des Versionskennzeichens mit dem Konzept der Ereignisquelle,
Figur 4 zeigt den Nachrichtenfluß durch alte und neue Software-Einheiten.

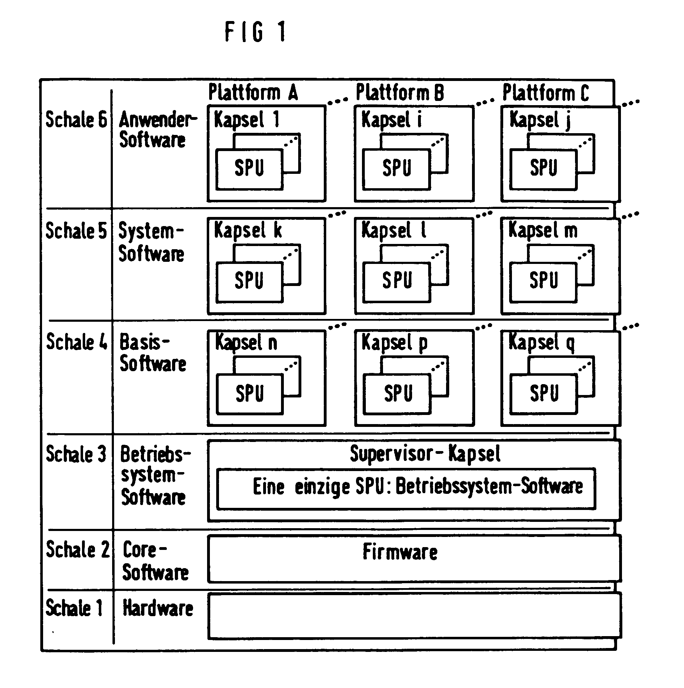

Figur 1 zeigt ein Schalenmodell für Verarbeitungsplattformen eines Steuerungssystems, das folgende Schalen aufweist: Eine erste Schale, die der Hardware der betrachteten drei Verarbeitungsplattformen entspricht,
eine zweite Schale, die der Firmware (Urlader, HardwareSchnittstelle, Fehlererkennung usw.) der Verarbeitungsplattform entspricht,
eine dritte Schale, die der Betriebssystem-Software (Betriebssystemkern, Fehlerbehandlung) entspricht, eine vierte Schale, die der Basis-Software (Datenbasis,
Überlaststeuerung usw.) der Verarbeitungsplattform entspricht und die mehrere Software-Einheiten, sogenannte Kapseln, umfaßt,
eine fünfte Schale, die der System-Software (Konfigurations-Software mit erfindungsgemäßem Erweiterungsmanager, Recovery-Software usw.) der Verarbeitungsplattform entspricht und die ebenfalls mehrere Kapseln umfaßt, eine sechste Schale, die der Anwender-Software (Vermittlungstechnik, Bedienerschnittstelle, Protokollabwicklung usw.) der Verarbeitungsplattform entspricht und die ebenfalls mehrere Kapseln umfaßt.

Nur die oberhalb der zweiten Schale ablaufende Software wird in Dienstleistungsmodulen SPU und in Kapseln zusammengefaßt. Die Schalen 1 bis 3 stellen zusammen die Grundverarbeitungsplattform dar und sind für jeden Verarbeitungsplattformtyp gleich.

Ein Dienstleistungsmodul umfaßt eine Menge von Prozeß- und Datenmodulen, die eine stark funktionale Beziehung zueinander haben und deren Inkarnationen (Dienstinstanzen) eine Gruppe von Diensten für die übrige Software oder die Teilnehmer des Vermittlungssystems zur Verfügung stellen. Die Komponenten (Modulen) eines Dienstleistungsmoduls befinden sich in demselben Adressraum des Speichers. Deshalb können für die Kommunikation innerhalb eines Dienstleistungsmoduls lokale Prozeduraufrufe und gemeinsame Speichermechanismen benützt werden.

Eine Kapsel umfaßt eine Gruppe von Dienstleistungsmodulen, denen gemeinsam ein bestimmtes Budget von Betriebsmitteln (z.B. geschützter Adressraum, Freispeicher, Zeitgeber) zur Verfügung gestellt ist. Eine Kapsel kann On-line, d.h. ohne Betriebsunterbrechung vom Betriebssystem in den Speicher des Steuerungssystems geladen und aktiviert werden. Die Kapsel stellt damit eine nach dem erfindungsgemäßen Verfahren austauschbare Software-Einheit dar.

Das Dienstleistungmodul ist eine relozierbare Einheit, d.h. es kann von einer Kapsel zu einer anderen Kapsel und ebenso von einer Verarbeitungsplattform zu einer anderen Verarbeitungsplattform zur Produktionszeit des Steuerungssystems bewegt werden. Daraus ergibt sich, daß die Schnittstellen eines Dienstleistungsmoduls durch Ausdrücke (Primitiven) der Inter-Prozeß-Kommunikation definiert werden müssen (z.B. CAST, Remote-Prozeduren). Jede Aktion oder jeder Steuerungsdatenfluß zwischen zwei Dienstleistungsmodulen wird durch die Übergabe von Meldungen ausgelöst. Die Kommunikation zwischen zwei Dienstleistungsmodulen erfolgt somit ausschließlich über das Betriebssystem.

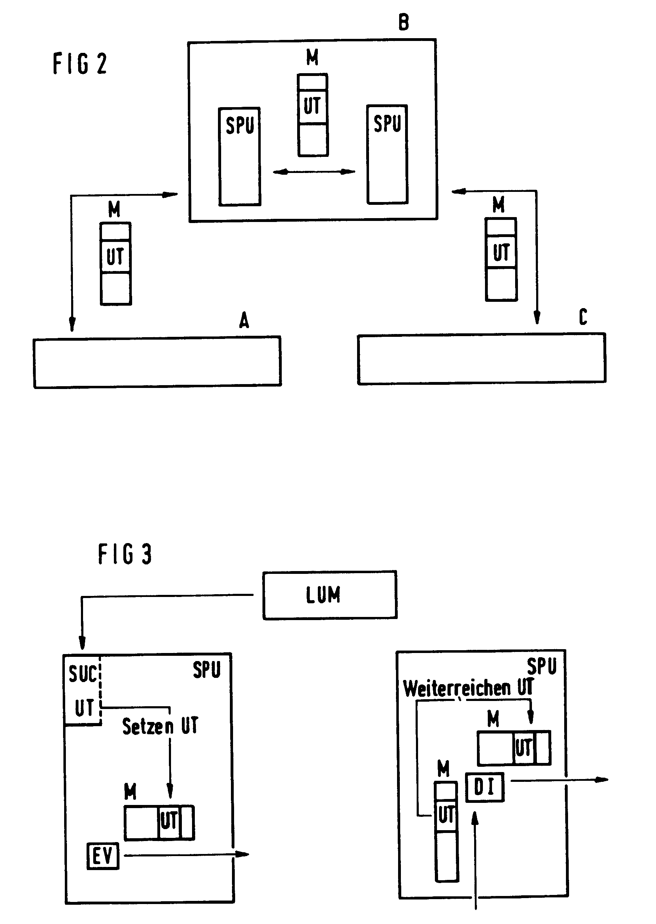

Figur 2 zeigt den Nachrichtenaustausch zwischen zwei Dienstleistungsmodulen über Plattformen A, B und C. Jede übertragene Meldung M zwischen verschiedenen Plattformen (oder innerhalb einer Plattform zwischen verschiedenen Dienstleistungsmodulen SPU) besitzt einen globalen Nachrichtenkopf (Header). In diesem Nachrichtenkopf ist ein bestimmter Teil für ein Versionskennzeichen UT (Upgrade Token) reserviert, das dem Betriebssystem anzeigt, an welche Version einer Software-Einheit die entsprechende Meldung gesendet werden soll.

Immer wenn eine Dienstinstanz eines Dienstleistungsmoduls eine Kommunikationsbeziehung mit einer anderen Dienstinstanz eines anderen Dienstleistungsmoduls zwecks Ausführung eines Dienstes herstellen will, so führt sie einen entsprechenden Aufruf (Kommunikationsanforderung) an das Betriebssystem durch, in welchem der Name des angeforderten Diensttyps sowie weitere Auswahlkriterien angegeben sind, u.a. das bereits genannte Versionskennzeichen UT.

Als Resultat des Aufrufs erhält die aufrufende Dienstinstanz einen sogenannnten Kommunikationspfad (Kommunikationskanal) zurück, mit Hilfe dessen die Kommunikation zu der ausgewählten Server-Dienstinstanz aufgenommen werden kann. Die eigentliche Kommunikation wird sodann durch Senden von Meldungen oder Aufrufen von Remote-Prozeduren durchgeführt.

Jeder Anreiz (Ereignis), der eine Meldung zwischen zwei Dienstleistungsmodulen auslöst, kann eindeutig als äußerer oder innerer Anreiz spezifiziert werden. Ein äußerer Anreiz ist eine Meldung eines dritten Dienstleistungsmoduls, während jeder andere Anreiz ein innerer Anreiz (z.B. Hardware-Interrupt) ist. Software, die eine Meldung aufgrund eines inneren Anreizes aussendet, wird im folgenden als Ereignisquelle (Event Source) bezeichnet.

Ereignisquellen kommen innerhalb des Steuerungssystems z.B. an den Schnittstellen zwischen zwei Systemschichten vor, d.h. an denjenigen Stellen, wo Ereignisse (Events) von der Software einer Schicht das erste Mal aufgenommen werden. Eine Ereignisquelle ist derjenige Teil der Software eines Dienstleistungsmoduls durch den ein Hardware-oder Software-Ereignis zum ersten Mal bearbeitet wird.

Ein Ereignis kann z. B. das Abheben eines Telefonhörers durch einen Teilnehmer sein. Die das Ereignis beschreibende Meldung wird sodann einer Ereignisquelle zugesandt. Bei der Bearbeitung des Ereignisses durch die Ereignisquelle entstehen Folgenachrichten, die mit einem Versionskennzeichen UT versehen werden. Welches Versionskennzeichen zu benutzen ist, wird der Ereignisquelle von einem Erweiterungsmanager LUM mitgeteilt.

Diese Mitteilung wird durch den Erweiterungsmanager innerhalb einer Software-Einheit für alle Ereignisquellen, die einen bestimmten Ereignistyp bearbeitetn einheitlich vorgenommen und in einer entsprechenden Datenstruktur der Software-Einheit abgespeichert. Durch das Versionskennzeichen in den Folge-Nachrichten wird festgelegt, ob die sich an ein Ereignis dieses Ereignistyps anschließenden Aktionen bzw. Kommunikationen mit Hilfe der neuen Software oder der alten Software durchgeführt werden sollen.

Durch die Kombination des Konzepts des Versionskennzeichens mit dem Konzept der Ereignisquelle ist es möglich, zwischen zwei Softwareversionen einer Software-Einheit ohne Betriebsunterbrechung umzuschalten. Diese Umschaltung kann als als Soft cut over bezeichnet werden und wird wie folgt durchgeführt.

Alle Ereignisquellen des Steuerungssystems werden nacheinander, d.h. Software-Einheit für Software-Einheit, umgeschaltet, indem das neue Versionskennzeichen der neu eingebrachten Einheit jeweils in entsprechenden Datenstrukturen der umzuschaltenden Software-Einheiten (Ereignisquellen) abgespeichert wird (siehe Figur 3). Dadurch gelangen Meldungen aufgrund neuer Ereignisse nurmehr zu der neu geladenen Software-Einheit. Während des Umschaltevorgangs bleiben beide Versionen der auszutauschenden Software-Einheit gleichzeitig aktiv und können, falls notwendig, Daten miteinander austauschen.

Die Dauer des Umschaltevorganges ist so gewählt, daß die alte Software-Einheit nach Abschluß des Umschaltevorganges nicht mehr Meldungen von anderen Software-Einheiten des Steuerungssystems erhält und somit für den Rest des Steuerungssystems irrelevant geworden ist. Die alte auszutauschende Software-Einheit kann dann ohne weitere Folgen für die Funktionalität des Steuerungssystems deaktiviert und aus dem Arbeitsspeicher entfernt werden.

Figur 3 veranschaulicht die Kombination des Konzepts des Versionskennzeichens mit dem Konzept der Ereignisquelle. In Figur 3a versorgt ein Erweiterungsmanager LUM der Systemsoftware (fünfte Schale) eine Datenstruktur SUC eines Dienstleistungsmoduls SPU mit den aktuellen Versionskennzeichen UT. Eine Ereignisquelle EV entnimmt aufgrund eines Ereignisses aus der Datenstruktur SUC das entsprechende aktuelle Versionskennzeichen UT und trägt es in den Nachrichtenkopf der Ursprungs-Nachricht ein ("Setzen UT").

Des weiteren zeigt Figur 3b die Weiterreichung eines Versionskennzeichens in den Nachrichtenkopf einer Folge-Nachricht aufgrund eines externen Anreizes. Dabei wird das Versionskennzeichen von einer empfangenden Dienstinstanz DI aus dem Nachrichtenkopf der empfangenen Nachricht entnommen und in den Nachrichtenkopf der Folge-Nachricht eingetragen (Weiterreichen UT").

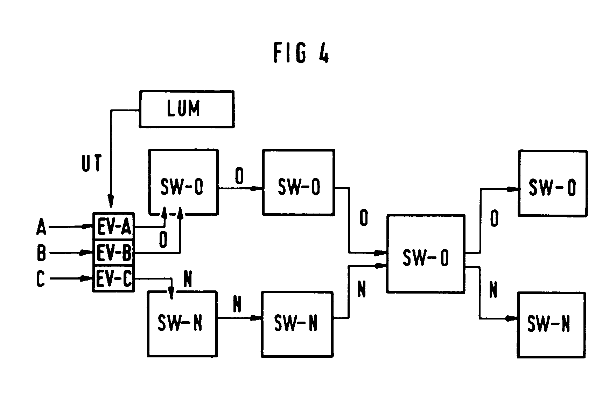

Figur 4 zeigt den Nachrichtenfluß durch alte Software-Einheiten SW-O und neue Software-Einheiten SW-N aufgrund verschiedener Ereignisse A, B und C. Die Ereignisse A, B und C werden dabei von Ereignisquellen EV-A, EV-B und EV-C empfangen, wobei den Ereignisquellen EV-A und EV-B vom Erweiterungsmanager LUM ein altes Versionskennzeichen 0 mitgeteilt worden ist, während der Ereignisquelle EV-C ein neues Versionskennzeichene N mitgeteilt worden ist. Wie aus Figur 4 unmittelbar ersichtlich, kann eine Kommunikationskette trotz eines neuen Versionskennzeichens N dennoch über eine alte Software-Einheit verlaufen, wenn diese alte Software-Einheit nicht durch eine neue Software-Einheit ersetzt wird.

Ein Ereignis, das eine Ursprungs-Nachricht auslöst, kann aus verschiedenen Ereignissen zusammengesetzt sein. In einem solchen Fall bestimmt dasjenige Teilereignis, das als letztes eintritt, das zugeordnete Versionskennzeichen für die Ursprungs-Nachricht. Wird beispielsweise ein Zähler durch verschiedene Nachrichten hochgezählt, so bestimmt das Versionskennzeichen im Nachrichtenkopf derjenigen Ursprungs-Nachricht, die den Zähler-Überfluß bestimmt, das Erweiterungszeichen im Nachrichtenkopf der Folge-Nachrichten.

Eine Ereignisquelle kann des weiteren während des Erweiterungsvorganges gesperrt werden, indem das zu dem zugehörigen Ereignis gehörige Kommando (z.B. MML-Kommando) gesperrt wird. Diese Möglichkeit stellt sicher, daß während der Software-Auswechslungsphase bestimmte Ereignistypen nicht behandelt werden müssen.

Für manche Anwendungen (z.B. CCS7) ist es nützlich, verschiedene Nachrichten bzw. Kommunikationsketten zu einer Nachrichtenklasse (z.B. maintenance-Klasse, application-Klasse) zusammenzufassen. Diese Nachrichtenklasse kann dann separat während einer Umschaltephase auf neue Software durch einen Trigger des Erweiterungsmanagers umgeschaltet werden und kann in diesem Fall als Umschalteeinheit bezeichnet werden.

Erweist sich die neue Software als fehlerhaft, ist es mit dem erfindungsgemäßen Verfahren des weiteren möglich, ohne Betriebsunterbrechung, d. h. weich auf die alte Software zurückzufallen. Dies wird dadurch erreicht, daß das Versionskennzeichen in einem solchen Fall wieder auf den alten Wert zurückgesetzt wird. Durch diese Rücksetzung des Versionskennzeichens werden die Folgemeldungen aller Ereignisquellen wieder die alte Software adressieren und die neue Software läßt sich somit anschließend unterbrechungsfrei aus dem Steuerungssystem entfernen.

Als umzuschaltende Software-Einheiten wurden bisher Dienstleistungsmodule dargestellt. Es ist jedoch ebenso möglich, als umzuschaltende Software-Einheiten Kapseln vorzusehen, falls als auszutauschende Software-Einheiten ebenfalls Kapseln verwendet werden.

Das aufgrund der erläuterten Software-Mechanismen realisierte Verfahren läßt sich abschließend wie folgt beschreiben:

In einem ersten Schritt wird eine neue Software-Einheit in den Prozessorspeicher geladen und aktiviert, wobei unter Aktivierung die Inkarnation (Instantiierung) der in der Software-Einheit enthaltenden Software-Module zu verstehen ist. Nach diesem Schritt ist die geladene Software-Einheit für das gesamte Software-System im Prinzip adressierbar. Da jedoch alle Meldungen aufgrund des alten Versionskennzeichens zunächst nur die alte Software-Einheit erreichen, werden die Dienste der neuen Software-Einheit zunächst noch nicht in Anspruch genommen.
In einem zweiten Schritt erfolgt nunmehr das Umschalten des Kommunikationsverkehrs auf die neue Software-Einheit. Das Umschalten des Kommunikationsverkehrs geschieht, wie bereits erwähnt, dadurch, daß ohne Betriebsunterbrechung nach und nach die Versionskennzeichen aller Ereignisquelim Steuerungssystem so eingestellt werden, daß alle Nachrichten nur noch zur neuen Software-Einheit gelangen. Während des Umschaltevorganges sind beide Versionen der zu ersetzenden Software-Einheit gleichzeitig aktiv.
In einem dritten Schritt wird die alte Software-Einheit von der Speicherverwaltung freigegeben. Da die alte Software-Einheit nach einem bestimmten Zeitraum nicht mehr Nachrichten von anderen Software-Einheiten des Systems erhält, wird sie nach dieser Zeitspanne für den Rest des Steuerungssystems bedeutungslos. Sie kann damit ohne weitere Folgen für die Funktionalität des Steuerungssystems freigegeben bzw. gelöscht werden.
In einem vierten Schritt werden schließlich die Schritte eins bis drei mit weiteren Software-Einheiten wiederholt, bis alle gewünschten neuen Softwareteile in das System eingebracht wurden.

Eine wesentliche Randbedingung für das beschriebene Verfahren ist die Koexistenz (Kompatibilität) von neuer zu alter Software, d. h. neu eingebrachte Software-Einheiten müssen mit weiterhin im System verbleibenden Software-Einheiten zusammenarbeiten können. Diese Bedingung ist aus Figur 4 anschaulich zu entnehmen.

## Patentansprüche

1. Realzeit-Steuerungssystem mit
a) wenigstens einem Steuerungsprozessor,
b) einem Software-System, das in ein Betriebssystem und in eine Mehrzahl von hierarchisch darüber liegenden Software-Einheiten unterteilt ist, die individuell in den Arbeitsspeicher des Steuerungsprozessors ladbar sind und die zur Durchführung ihrer Steuerungsaufgaben durch Meldungen (M) über das Betriebssystem miteinander kommunizieren, wobei jede Meldung neben einer systemweit eindeutigen Bezeichnung der adressierten Software-Einheit ein Versionskennzeichen (UT) enthält, das dem Betriebssystem die Version der adressierten Software-Einheit angibt,
c) einem Erweiterungssmanager (LUM) innerhalb des Software-Systems, der den Software-Einheiten das in einer Meldung zu verwendende Versionskennzeichen mitteilt.

2. Verfahren zum Auswechseln von Software in einem Realzeit-Steuerungssystem, das mindestens einen Steuerungsprozessor mit Betriebssystem und hierarchisch darüber liegenden Software-Einheiten umfaßt, wobei die Software-Einheiten durch Meldungen (M) über das Betriebssystem miteinander kommunizieren , wobei jede Meldung neben einer Bezeichnung der adressierten Software-Einheit ein Versionskennzeichen (UT) enthält, das dem Betriebssystem die Version der adressierten Software-Einheit angibt, demgemäß
a) eine Software-Einheit von neuer Version zunächst in den Arbeitsspeicher des Steuerungsprozessors geladen und aktiviert wird,
b) sodann der Kommunikationsverkehr ohne Unterbrechung auf die neu geladene Software-Einheit umgeschaltet wird, indem das Versionskennzeichen der neu geladenen Software-Einheiten den übrigen Software-Einheiten des Software-Systems mitgeteilt wird,
c) schließlich die alte Software-Einheit deaktiviert und der diesbezügliche Speicherbereich vom Betriebssystem wieder freigegeben wird.

3. Verfahren nach Anspruch 2,
**dadurch gekennzeichnet,** daß
a) das Versionskennzeichen der neu geladenen Software-Einheit nur speziellen Software-Einheiten mitgeteilt wird, nämlich sogenannten Ereignisquellen, die Aktionen des Steuerungssystems aufgrund eines Ereignisses auslösen, indem sie Ursprungs-Meldungen an andere Software-Einheiten absenden,
b) das Versionskennzeichen für eine Folge-Meldung aus der die Folge-Meldung auslösenden Meldung in die Folge-Meldung übernommen wird.

4. Verfahren nach Anspruch 3,
**dadurch gekennzeichnet,** daß
das zu verwendende Versionskennzeichen (UT) den Ereignisquellen jeweils pro Kommunikationsanforderung mitgeteilt wird.

5. Verfahren nach Anspruch 3,
**dadurch gekennzeichnet,** daß
das zu verwendende Versionskennzeichen den Ereignisquellen vom Erweiterungsmanager (LUM) nur einmalig mitgeteilt und dann von den Ereignisquellen selbst bei jeder Kommunikationsanforderung dem Betriebssystem angegeben wird.

6. Verfahren nach Anspruch 5,
**dadurch gekennzeichnet**, daß
eine Ereignisquelle während der Auswechslungsphase von Software gesperrt werden kann.

7. Verfahren nach einem der Ansprüche 3 bis 6,
**dadurch gekennzeichnet,** daß
das neue Versionskennzeichen nur bestimmten Gruppen von Ereignisquellen mitgeteilt werden kann.

8. Verfahren nach einem der Ansprüche 2 bis 7,
**dadurch gekennzeichnet,** daß
a) nach dem Umschalten auf die neue Software-Einheit überprüft wird, ob die neue Software-Einheit fehlerfrei funktioniert,
b) bei einer festgestellten Fehlerhaftigkeit der neuen Software-Einheit durch erneute Mitteilungen an die übrigen Software-Einheiten das zu verwendende Versionskennzeichen wieder auf den alten Werrt gesetzt wird und anschließend die neue Software-Einheit deaktiviert und der diesbezügliche Speicherbereich vom Betriebssystem wieder freigegeben wird.

## Claims

1. Real-time control system having
a) at least one control processor,
b) a software system which is split into an operating system and into a plurality of software units which are located hierarchically above it, can be loaded individually into the random access memory of the control processor and communicate with one another by means of messages (M) via the operating system in order to carry out their control tasks, each message containing a version identification (UT) in addition to a designation, which is unique throughout the system, of the addressed software unit, which version identification (UT) indicates to the operating system the version of the software unit addressed,
c) an upgrade manager (LUM) within the software system, which reports to the software units the version identification to be used in a message.

2. Method for replacement of software in a real-time control system, which comprises at least one control processor having an operating system and software units which are located hierarchically above it, the software units communicating with one another by means of messages (M) via the operating system, each message containing a version identification (UT) in addition to a designation of the software unit addressed, which version identification (UT) indicates to the operating system the version of the software unit addressed, according to which
a) a software unit of a new version is first of all loaded into the random access memory of the control processor and is activated,
b) the communications traffic is then switched over to the newly loaded software unit without any interruption, in that the version identification of the newly loaded software units is reported to the other software units in the software system,
c) finally, the old software unit is deactivated and the memory area relating to it is released again by the operating system.

3. Method according to Claim 2, characterized in that
a) the version identification of the newly loaded software unit is reported only to specific software units, namely to so-called event sources which initiate actions of the control system on the basis of an event, in that they send origin messages to other software units,
b) the version identification for a following message is transferred into the following message from the message which initiates the following message.

4. Method according to Claim 3, characterized in that the version identification (UT) to be used is reported to the event sources, for each communication request.

5. Method according to Claim 3, characterized in that the version identification to be used is reported by the upgrade manager (LUM) to the event sources only once, and is then indicated to the operating system by the event sources themselves, with each communication request.

6. Method according to Claim 5, characterized in that an event source can be inhibited during the software replacement phase.

7. Method according to one of Claims 3 to 6, characterized in that the new version identification can be reported only to specific groups of event sources.

8. Method according to one of Claims 2 to 7, characterized in that
a) after changing over to the new software unit, a check is carried out to determine whether the new software unit is operating correctly,
b) if a malfunction is found in the new software unit, the version identification to be used is set to the old value again by means of repeated messages to the other software units, and the new software unit is then deactivated and the memory area relating to it is released again by the operating system.

## Revendications

1. Système de commande en temps réel, comprenant
a) au moins un processeur de commande,
b) un système logiciel, qui est divisé en un système d'exploitation et en une pluralité d'unités logicielles situées au-dessus selon une hiérarchie, qui peuvent être chargées individuellement dans la mémoire de travail du processeur de commande et qui communiquent entre elles pour l'exécution de leurs tâches de commande, au moyen de messages (M) par l'intermédiaire du système d'exploitation, chaque message contenant, outre une désignation, non-équivoque au niveau de l'ensemble du système, de l'unité logicielle concernée, un identificateur de version (UT), qui indique au système d'exploitation la version de l'unité logicielle désignée,
c) un régisseur d'extension (LUM), présent à l'intérieur du système logiciel et qui communique aux unités logicielles l'identificateur de version à utiliser dans un message.

2. Procédé d'échange de logiciels dans un système de commande en temps réel, qui comprend au moins un processeur de commande avec système d'exploitation et des unités logicielles situées au-dessus selon une hiérarchie, les unités logicielles communiquant entre elles par des messages (M) par l'intermédiaire du système d'exploitation, chaque message contenant, outre une désignation de l'unité logicielle concernée, un identificateur de version (UT), qui indique au système d'exploitation la version de l'unité logicielle désignée, procédé dans lequel
a) une unité logicielle de version nouvelle est d'abord chargée dans la mémoire de travail du processeur de commande et mise en fonction,
b) ensuite le trafic de communications est permuté, sans interruption, sur l'unité logicielle nouvellement chargée, tandis que l'identificateur de version de l'unité logicielle nouvellement chargée est communiqué aux autres unités logicielles du système logiciel,
c) enfin, l'ancienne unité logicielle est mise hors fonction et la zone de mémoire qui lui était associée est de nouveau libérée par le système d'exploitation.

3. Procédé selon la revendication 2,
caractérisé par le fait que
a) l'identificateur de version de l'unité logicielle nouvellement chargée n'est communiqué qu'à des unités logicielles spéciales, à savoir des unités appelées sources d'événements, qui déclenchent des actions du système de commande en raison d'un événement, tandis qu'elles envoient des messages d'origine à d'autres unités logicielles,
b) l'identificateur de version pour une suite de messages étant repris, à partir du message déclenchant la suite de messages, dans la suite de messages.

4. Procédé selon la revendication 3,
caractérisé par le fait que
l'identificateur de version (UT) à utiliser est communiqué aux sources d'événements pour chaque demande de communication.

5. Procédé selon la revendication 3,
caractérisé par le fait que
l'identificateur de version à utiliser n'est communiqué aux sources d'événements qu'une seule fois par le régisseur d'extension (LUM) et qu'ensuite, il est indiqué par les sources d'événements elles-mêmes au système d'exploitation à chaque demande de communication.

6. Procédé selon la revendication 5,
caractérisé par le fait que,
pendant la phase d'échange, une source d'événements peut être bloquée par le logiciel.

7. Procédé selon l'une des revendications 3 à 6,
caractérisé par le fait que
le nouvel identificateur de version peut n'être communiqué qu'à des groupes déterminés de sources d'événements.

8. Procédé selon l'une des revendications 2 à 7,
caractérisé par le fait que
a) après la commutation sur la nouvelle unité logicielle, il est vérifié si la nouvelle unité logicielle fonctionne correctement,
b) dans le cas de la constatation de défauts de la nouvelle unité logicielle, l'identificateur de version à utiliser est remis à l'ancienne valeur, avec nouvelles notifications aux autres unités logicielles, et la nouvelle unité logicielle est ensuite mise hors fonction et la zone de mémoire, qui lui était associée, est de nouveau libérée par le système d'exploitation.
